# FASCICULE DE BREVET EUROPEEN

(11) **EP 3 724 652 B1**
(45) Date de publication et mention de la délivrance du brevet: **23.04.2025**
(21) Numéro de dépôt: 18839830.9
(22) Date de dépôt: 13.12.2018
(51) Int. Cl.: G01N 29/04, G01N 29/06, G01N 29/24, G01N 29/44

(54) **DISPOSITIF, INSTALLATION ET PROCEDE D'IMAGERIE DE DEFAUTS D'UNE STRUCTURE PAR EMISSION ET RECEPTION D'ONDES MECANIQUES DANS CETTE STRUCTURE**
VORRICHTUNG, SYSTEM UND VERFAHREN ZUR BILDGEBUNG VON DEFEKTEN IN EINER STRUKTUR DURCH SENDEN UND EMPFANGEN VON MECHANISCHEN WELLEN DURCH DIE STRUKTUR
DEVICE, SYSTEM AND PROCESS FOR IMAGING DEFECTS IN A STRUCTURE BY TRANSMITTING AND RECEIVING MECHANICAL WAVES THROUGH THE STRUCTURE

(30) Priorité: 14.12.2017 FR 1762166
(43) Date de publication de la demande: 21.10.2020
(73) Titulaire: Commissariat à l'Energie Atomique et aux Energies Alternatives, 75015 Paris (FR); SAFRAN, 75015 Paris (FR)
(72) Inventeur: MESNIL, Olivier, 91400 Orsay (FR)
(74) Mandataire: Bonnet, Michel
(86) Numéro de dépôt international: PCT/FR2018/053287
(87) Numéro de publication internationale: WO 2019/115971

(56) Documents cités:
- CN-A- 107 037 131
- FR-A1- 3 014 200
- XIAOLIANG ZHAO ET AL: "Active health monitoring of an aircraft wing with embedded piezoelectric sensor/actuator network: I. Defect detection, localization and growth monitoring", SMART MATERIALS AND STRUCTURES, IOP PUBLISHING LTD., BRISTOL, GB, vol. 16, no. 4, 1 August 2007 (2007-08-01), pages 1208 - 1217, XP020120524, ISSN: 0964-1726, DOI: 10.1088/0964-1726/16/4/032
- SAKAI KAORU ET AL: "Defect detection method using statistical image processing of scanning acoustic tomography", 2016 IEEE 23RD INTERNATIONAL SYMPOSIUM ON THE PHYSICAL AND FAILURE ANALYSIS OF INTEGRATED CIRCUITS (IPFA), IEEE, 18 July 2016 (2016-07-18), pages 293 - 296, XP032958707, DOI: 10.1109/IPFA.2016.7564303
- DATABASE EPODOC [online] EUROPEAN PATENT OFFICE, THE HAGUE, NL; 4 May 2017 (2017-05-04), UNIV CENTRAL SOUTH: "Small defect ultrasonic detecting method based on extreme value distribution theory", XP002790679, Database accession no. CN-201710306311-A

## Description

La présente invention concerne un dispositif d'imagerie de défauts d'une structure par émission et réception d'ondes mécaniques dans cette structure. Elle concerne également un procédé d'imagerie mis en œuvre par un tel dispositif et une installation comportant un tel dispositif.

Elle s'applique en particulier, mais pas exclusivement, aux domaines du contrôle non destructif (« nondestructive testing » en anglais) et de la surveillance d'intégrité structurelle (« structural health monitoring » en anglais) de structures minces par ondes élastiques guidées. Dans ces applications, les ondes mécaniques élastiques mesurées peuvent, éventuellement comparées à un état de référence, fournir des informations sur un état de la structure et identifier, localiser et parfois quantifier des défauts de type trou, délaminage, fissure, corrosion, etc.

Un grand nombre d'algorithmes différents, basés sur des captures d'ondes mécaniques séquentiellement émises dans la structure par exemple à l'aide de transducteurs piézoélectriques, peut être mis en œuvre par un tel dispositif d'imagerie. Certains algorithmes fournissent des résultats très précis mais nécessitent généralement une connaissance *a priori* de la géométrie de la structure, ou au moins des caractéristiques de la propagation des ondes dans la structure qui sont issues de ses propriétés mécaniques. Ils posent alors problème pour l'imagerie de structures complexes ou méconnues telles que l'on peut en trouver dans le domaine de l'aéronautique. Il existe également des algorithmes simples ne nécessitant pas de connaissance *a priori* de la géométrie de la structure et de ses propriétés mécaniques, mais les résultats obtenus sont généralement moins bons.

L'invention s'applique plus particulièrement à un dispositif d'imagerie mettant en œuvre un algorithme simple et comportant :
- une pluralité de N émetteurs d'ondes mécaniques destinées à se propager dans la structure, à répartir sur au moins une surface de la structure,
- une pluralité de P récepteurs d'ondes mécaniques après leur propagation dans la structure, à répartir sur ladite au moins une surface de la structure,
- une unité centrale de commande des N émetteurs et P récepteurs programmée pour enregistrer Q ≤ N×P signaux obtenus à partir de signaux électriques fournis respectivement par les récepteurs de Q couples différents émetteur/récepteur de la pluralité d'émetteurs et récepteurs, après réception d'ondes mécaniques émises par les émetteurs desdits Q couples différents,
- des moyens de stockage de Q premiers signaux de référence correspondants, représentatifs de la structure sans défauts, et
- une unité centrale de traitement des Q signaux obtenus, programmée pour corréler chaque signal obtenu avec le premier signal de référence qui lui correspond, de manière à obtenir Q premières valeurs de corrélations, et pour construire une image de probabilités de défauts dans la structure à partir des Q premières valeurs de corrélations.

Un tel dispositif est par exemple décrit dans l'article de Zhao et al, intitulé « Active health monitoring of an aircraft wing with embedded piezoelectric sensor/actuator network: I. Defect detection, localization and growth monitoring », publié dans Smart Materials and Structures, IOP Publishing, volume 16, pages 1208-1217 (2007). Il met en œuvre une méthode algorithmique appelée RAPID (de l'anglais « Reconstruction Algorithm for Probabilistic Inspection of Defects ») selon laquelle chaque valeur de corrélation associée à un couple constitué de l'un des émetteurs et de l'un des récepteurs est exploitée pour construire une image intermédiaire de localisation probable d'un ou plusieurs défauts dans une zone elliptique prédéterminée autour de l'émetteur et du récepteur considérés. Cette zone est délimitée par une ellipse dont les foyers sont par exemple l'émetteur et le récepteur du couple considéré. La probabilité est inversement proportionnelle à la valeur de corrélation calculée et décroît vers 0 lorsque l'on s'éloigne du segment émetteur-récepteur vers l'ellipse. On construit alors l'image complète de probabilités de défauts dans la structure en sommant les Q images intermédiaires.

Il est clair qu'un tel dispositif propose une solution d'imagerie particulièrement simple et indépendante de la géométrie, même complexe, et du matériau de la structure inspectée. Le temps de calcul est négligeable. En revanche, par l'exploitation des valeurs de corrélations à l'aide d'un modèle elliptique appliqué autour de chaque couple d'émetteur et récepteur, il introduit un biais clairement visible en figure 11 de l'article de Zhao et al précité. Ce biais est fortement dépendant de la disposition des émetteurs et récepteurs sur la structure inspectée et un filtrage, difficile à paramétrer ou à reproduire de façon systématique, est indispensable. Le résultat est alors approximatif et peu fiable. En particulier, le risque de détecter des défauts inexistants (généralement appelé « fausse alarme ») est important : par exemple, lorsque les émetteurs et récepteurs sont disposés en cercle autour d'une zone à imager, la probabilité de détecter un faux défaut au centre du cercle, là où se croisent de nombreux segments constitués par les différents couples possibles émetteur/récepteur, est élevée.

L'article de Li et al, intitulé « Combination of nonlinear ultrasonics and guided wave tomography for imaging the micro-defects », publié dans Ultrasonics, Elsevier, volume 65, pages 87-95 (2016), propose une amélioration de l'algorithme RAPID. Il s'agit d'optimiser la détermination du paramètre de décroissance des valeurs de corrélations dans les zones elliptiques considérées. Mais cela ne résout pas le problème du biais et des fausses alarmes qui en résultent.

L'article de Sakai et al. , intitulé "Defect detection method using statistical image processing of scanning acoustic tomography", publié en 2016 dans IEEE 23RD INTERNATIONAL SYMPOSIUM ON THE PHYSICAL AND FAILURE ANALYSIS OF INTEGRATED CIRCUITS (IPFA), IEEE, pages 293-296, propose une technique d'acquisition et de traitement différente pour construire une image de défauts d'une structure.

Il peut ainsi être souhaité de prévoir un dispositif d'imagerie qui permette de s'affranchir d'au moins une partie des problèmes et contraintes précités.

Il est donc proposé un dispositif d'imagerie de défauts d'une structure par émission et réception d'ondes mécaniques dans cette structure, comportant :
- une pluralité de N émetteurs d'ondes mécaniques destinées à se propager dans la structure, à répartir sur au moins une surface de la structure,
- une pluralité de P récepteurs d'ondes mécaniques après leur propagation dans la structure, à répartir sur ladite au moins une surface de la structure,
- une unité centrale de commande des N émetteurs et P récepteurs programmée pour enregistrer Q ≤ N×P signaux obtenus à partir de signaux électriques fournis respectivement par les récepteurs de Q couples différents émetteur/récepteur de la pluralité d'émetteurs et récepteurs, après réception d'ondes mécaniques émises par les émetteurs desdits Q couples différents,
- des moyens de stockage de Q premiers signaux de référence correspondants, représentatifs de la structure sans défauts,
- une unité centrale de traitement des Q signaux obtenus, programmée pour corréler chaque signal obtenu avec le premier signal de référence qui lui correspond, de manière à obtenir Q premières valeurs de corrélations, et pour construire une image de probabilités de défauts dans la structure à partir des Q premières valeurs de corrélations,
comportant en outre des moyens de stockage de Q deuxièmes signaux de référence correspondants, représentatifs également de la structure sans défauts mais se différenciant des Q premiers signaux de référence par du bruit aléatoire, l'unité centrale de traitement des Q signaux obtenus étant en outre programmée pour :
- corréler chaque premier signal de référence avec le deuxième signal de référence qui lui correspond, de manière à obtenir Q deuxièmes valeurs de corrélations,
- construire une image bruitée de référence à partir des Q deuxièmes valeurs de corrélations, et
- soustraire l'image bruitée de référence de l'image de probabilités de défauts.

Ainsi, l'image bruitée de référence reprend le biais introduit par l'exploitation des Q deuxièmes valeurs de corrélations calculées, quel que soit le modèle employé pour exploiter ces valeurs, et il se trouve que ce biais est essentiellement le même que celui introduit par l'exploitation des Q premières valeurs de corrélations. Il a en outre été constaté que ce biais est finalement assez peu dépendant de la façon dont sont obtenus, par mesures ou par ajout de bruit simulé, les premiers et deuxièmes signaux de référence représentatifs de la structure sans défauts.

De façon optionnelle, au moins une partie des N émetteurs fait partie des P récepteurs.

De façon optionnelle également, chacun des N émetteurs et des P récepteurs est un actionneur ou capteur choisi dans l'ensemble constitué de :
- un transducteur piézoélectrique,
- un transducteur électromagnétique-acoustique,
- un transducteur microélectromécanique ou nanoélectromécanique,
- un capteur à fibre optique, et
- un capteur laser.

De façon optionnelle également, chacun des N émetteurs et des P récepteurs est apte à émettre ou capter des ondes guidées dans la structure, notamment des ondes de Lamb ou de Rayleigh.

En particulier, lorsque ce sont des transducteurs piézoélectriques qui sont utilisés, ils peuvent tous être avantageusement utilisés à la fois en émetteurs et en récepteurs. En outre, si l'une (par exemple l'épaisseur) des dimensions caractéristiques de la structure inspectée est beaucoup plus petite que ses deux autres dimensions caractéristiques (i.e. la longueur et la largeur), ce sont des ondes ultrasonores guidées de Lamb qui se propagent dans la structure. Si les trois dimensions caractéristiques précitées de la structure sont du même ordre de grandeur, ce sont des ondes ultrasonores guidées de Rayleigh qui se propagent à la surface de la structure.

De façon optionnelle également, les Q deuxièmes signaux de référence se différencient des Q premiers signaux de référence par du bruit aléatoire, simulé ou mesuré, dont l'écart-type est compris entre celui d'un bruit mesurable dans les Q premiers signaux de référence et celui d'un signal impulsionnel ou harmonique utile également mesurable dans les Q premiers signaux de référence, de préférence plus proche de celui du bruit mesurable que de celui du signal impulsionnel utile mesurable.

De façon optionnelle également, Q = NxP, ou N = P et Q = N×(N-1). Dans ce cas, tous les couples différents possibles émetteur/récepteur sont sollicités.

De façon optionnelle également, la construction de l'image de probabilités de défauts et la construction de l'image bruitée de référence comportent chacune la construction de Q images intermédiaires, chaque image intermédiaire correspondant à l'un des Q couples différents émetteur/récepteur et prenant en compte la première ou deuxième valeur de corrélation correspondante dans une zone prédéterminée, notamment une zone elliptique, définie autour du segment constitué entre l'émetteur et le récepteur de ce couple.

Il est également proposé une installation d'imagerie de défauts d'une structure par émission et réception d'ondes mécaniques dans cette structure, comportant :
- la structure dans laquelle se trouve une zone à imager,
- un dispositif d'imagerie selon l'invention,
dans laquelle les N émetteurs et P récepteurs sont disposés circulairement autour de la zone à imager pour une construction de l'image de probabilités de défauts correspondant à cette zone.

Il est également proposé une installation d'imagerie de défauts d'une structure par émission et réception d'ondes mécaniques dans cette structure, comportant :
- la structure dans laquelle se trouve une zone à imager,
- un dispositif d'imagerie selon l'invention,
dans laquelle les N émetteurs et P récepteurs sont répartis à l'intérieur de la zone à imager pour une construction de l'image de probabilités de défauts correspondant à cette zone.

Il est également proposé un procédé d'imagerie de défauts d'une structure par émission et réception d'ondes mécaniques dans cette structure, comportant les étapes suivantes :
- répartir, sur au moins une surface de la structure, une pluralité de N émetteurs d'ondes mécaniques destinées à se propager dans la structure,
- répartir, sur ladite au moins une surface de la structure, une pluralité de P récepteurs d'ondes mécaniques après leur propagation dans la structure,
- commander les N émetteurs et P récepteurs pour émettre et recevoir séquentiellement des ondes mécaniques par les émetteurs et récepteurs de Q ≤ N×P couples différents émetteur/récepteur de la pluralité d'émetteurs et récepteurs,
- enregistrer Q signaux obtenus à partir de signaux électriques fournis respectivement par les récepteurs des Q couples différents, après réception desdites ondes mécaniques,
- traiter les Q signaux obtenus en les corrélant respectivement avec Q premiers signaux de référence correspondants, représentatifs de la structure sans défauts, de manière à obtenir Q premières valeurs de corrélations,
- construire une image de probabilités de défauts dans la structure à partir des Q premières valeurs de corrélations,
comportant en outre les étapes suivantes :
- corréler les Q premiers signaux de référence respectivement avec Q deuxièmes signaux de référence correspondants, représentatifs également de la structure sans défauts mais se différenciant des Q premiers signaux de référence par du bruit aléatoire, de manière à obtenir Q deuxièmes valeurs de corrélations,
- construire une image bruitée de référence à partir des Q deuxièmes valeurs de corrélations, et
- soustraire l'image bruitée de référence de l'image de probabilités de défauts.

L'invention sera mieux comprise à l'aide de la description qui va suivre, donnée uniquement à titre d'exemple et faite en se référant aux dessins annexés dans lesquels :
- la figure 1 représente schématiquement la structure générale d'une installation d'imagerie de défauts d'une structure, selon un premier mode de réalisation de l'invention,
- la figure 2 représente schématiquement la structure générale d'une installation d'imagerie de défauts d'une structure, selon un deuxième mode de réalisation de l'invention,
- la figure 3 illustre les étapes successives d'un procédé d'imagerie mis en œuvre par l'installation de la figure 1 ou 2,
- les figures 4 et 5 représentent, en vues de face avant et face arrière, un exemple de structure à imager, et
- les figures 6A, 6B et 6C illustrent respectivement une image de probabilités de défauts initiale, une image bruitée de référence et une image de probabilités de défauts corrigée, obtenues par application du procédé de la figure 3 sur la structure des figures 4 et 5.

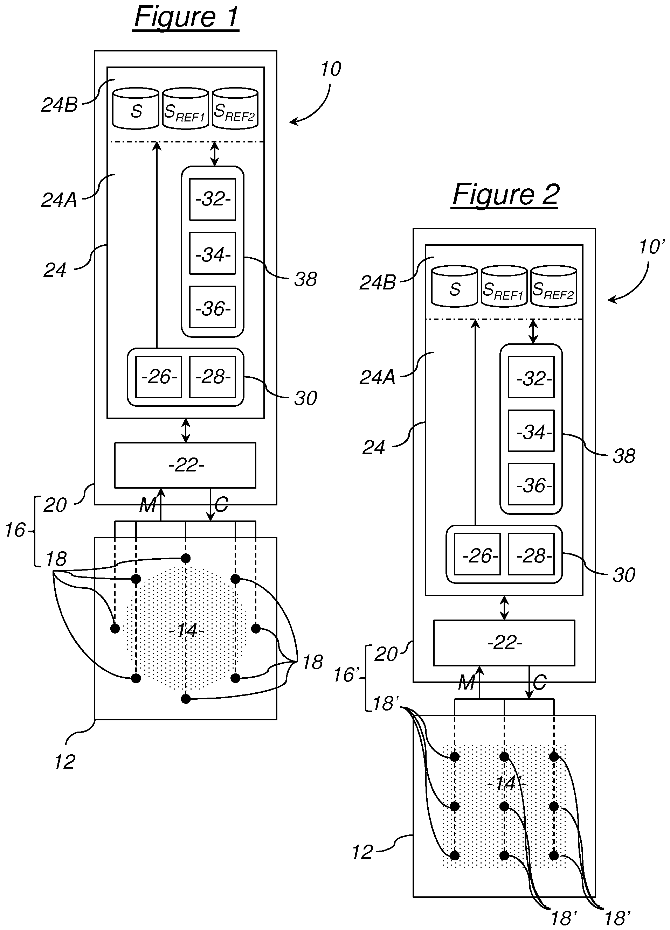

L'installation 10 illustrée sur la figure 1 comporte une structure 12 présentant une zone circulaire 14 à imager représentée en grisé. La structure 12 est par exemple une structure mince de pièce aéronautique. Mais il pourrait également s'agir de toute pièce du domaine aérospatial, automobile, pétrolier, ou plus généralement de toute domaine industriel dans lequel on s'interroge sur l'état structurel de pièces fabriquées, notamment de pièces minces, c'est-à-dire dont les dimensions latérales sont très grandes (i.e. au moins supérieures à 10 fois) devant l'épaisseur.

L'installation 10 comporte en outre un dispositif d'imagerie 16 apte à détecter et localiser un ou plusieurs défauts dans la structure 12 par émission et réception d'ondes mécaniques. A cet effet, le dispositif d'imagerie 16 comporte plusieurs transducteurs 18 aptes à émettre des ondes mécaniques destinées à se propager dans la structure 12 et un circuit électronique 20 de commande et de traitement. Dans l'exemple particulier de la figure 1, les transducteurs émetteurs 18 sont représentés par des points noirs. Ils sont au nombre de N = 8 et répartis en cercle autour de la zone circulaire 14 à imager, cette répartition pouvant être régulière sans que cela ne soit une obligation. Ils remplissent en outre une fonction de réception d'ondes mécaniques après leur propagation dans la structure 12. Dans cet exemple également, ils sont électriquement reliés au circuit électronique 20 qui commande leurs émissions d'ondes mécaniques et traite les signaux électriques qu'ils fournissent sur réception d'ondes mécaniques. Mais d'une façon plus générale, les émetteurs d'ondes ne sont pas nécessairement récepteurs et réciproquement. Par ailleurs, le nombre N d'émetteurs n'est pas nécessairement le même que le nombre P de récepteurs. En revanche, au moins une partie des N émetteurs peut faire partie des P récepteurs. En variante également, on peut envisager de déporter l'électronique de commande au niveau de chaque transducteur. Dans ce cas, la liaison électrique entre le circuit électronique 20 et les transducteurs 18 n'est plus nécessaire, la transmission des signaux fournis par les récepteurs pouvant se faire par télécommunication, notamment par télécommunication sans fil (par exemple à l'aide d'un protocole sans fil de type wi-fi).

De façon bien connue dans les dispositifs d'imagerie par émission et réception d'ondes mécaniques, les transducteurs 18 sont avantageusement des transducteurs piézoélectriques : de tels transducteurs remplissent à la fois les fonctions d'actionneurs et capteurs et sont très bon marché. Ils agissent dans le domaine des ondes ultrasonores qui se propagent très bien, dans les matériaux généralement inspectés, sous la forme d'ondes guidées de Lamb ou de Rayleigh. L'avantage des ondes de Lamb, c'est qu'elles interrogent toute l'épaisseur de la structure, permettant la détection de défauts invisibles en surface, mais elles ne se propagent aisément que dans les structures minces. Les ondes de Rayleigh sont adaptées aux structures épaisses, mais elles ne se propagent qu'en surface, n'interrogeant ainsi qu'une profondeur limitée de la structure. D'une façon plus générale, chacun des N émetteurs et des P récepteurs est un actionneur ou capteur qui peut être choisi parmi un transducteur piézoélectrique, un transducteur électromagnétique-acoustique EMAT (de l'anglais « ElectroMagnetic Acoustic Transducer »), un transducteur microélectromécanique MEMS (de l'anglais « MicroElectroMechanical Systems ») ou nanoélectromécanique NEMS (de l'anglais « NanoElectroMechanical Systems »), un capteur à fibre optique, un capteur laser, ou autre.

Par ailleurs, la disposition en cercle des transducteurs 18 de la figure 1 autour de la zone circulaire 14 à imager est généralement qualifiée de « configuration de tomographie », par analogie avec l'imagerie tomographique selon laquelle les émetteurs et récepteurs sont également disposés en cercle. Cette configuration, généralement onéreuse en termes de transducteurs parce qu'elle en nécessite concrètement un grand nombre, permet d'obtenir des informations assez précises sur la santé de la structure dans la zone entourée par les transducteurs.

Comme indiqué précédemment, dans l'exemple non limitatif de la figure 1 le circuit électronique 20 est connecté aux transducteurs 18 afin de leur transmettre des signaux de commande C pour l'émission d'impulsions ultrasonores et afin de recevoir des signaux de mesure M en réponse à l'émission de ces impulsions. Le circuit électronique 20 est par exemple celui d'un ordinateur. Il présente une unité centrale de traitement 22, telle qu'un microprocesseur conçu pour émettre vers les transducteurs 18 les signaux de commande C, pour recevoir des transducteurs 18 les signaux de mesure M et pour traiter ces derniers, ainsi qu'une mémoire 24, par exemple une mémoire RAM, dans laquelle sont enregistrées des instructions de programme(s) d'ordinateur et des données de traitement.

Les instructions de programme(s) d'ordinateur sont illustrées sur la figure 1 comme appartenant à une première portion 24A de la mémoire 24 et comme définies :
- dans deux programmes d'ordinateur 26 et 28 d'un premier module fonctionnel 30 qui, en coopération avec le microprocesseur 22, forme une unité centrale de commande des transducteurs 18, et
- dans trois programmes d'ordinateurs 32, 34, 36 d'un deuxième module fonctionnel 38 qui, en coopération avec le microprocesseur 22, forme une unité centrale de traitement des signaux de mesure M.

Le programme d'ordinateur 26 de l'unité centrale de commande 22, 30 comporte des instructions définies pour commander séquentiellement les transducteurs 18 en émission et réception d'ondes guidées dans la structure 12. Plus précisément, plusieurs couples émetteur/récepteur différents peuvent être constitués à partir des N = 8 transducteurs 18 : au maximum N² = 64 puisque chaque transducteur 18 peut être à la fois émetteur et récepteur. En particulier, même si l'intérêt est limité en termes de qualité d'image, il est possible de mesurer ce que reçoit l'émetteur d'une onde. Mais en général, et notamment dans l'état de la technique précité, au maximum N×(N-1) = 56 couples sont considérés parce que chaque émetteur est avantageusement employé en transmission, c'est-à-dire que l'on ne mesure pas ce que reçoit l'émetteur d'une onde. Par ailleurs, en théorie, un couple émetteur/récepteur devrait donner les mêmes résultats que le couple inversé dans lequel l'émetteur devient récepteur et le récepteur devient émetteur, mais en pratique ce n'est jamais le cas à cause notamment du bruit engendré par la mesure. Considérer la totalité des N×(N-1) = 56 couples possibles à partir des N = 8 transducteurs 18 présente donc un intérêt de moyenner les résultats. Plus généralement, pour un dispositif d'imagerie 16 à N émetteurs et P récepteurs, N×P couples différents peuvent être constitués au maximum. Ainsi, conformément à la présente invention, le programme d'ordinateur 26 comporte des instructions pour commander successivement en émission et réception Q ≤ N×P (ou Q ≤ N² ou Q ≤ N×(N-1), si N = P, notamment lorsque les émetteurs sont également les récepteurs) couples émetteur/récepteur différents. Au mieux, Q = N×P couples peuvent être constitués. En pratique, une onde impulsionnelle ou harmonique de durée finie est émise par l'émetteur de chaque couple lorsqu'il est actionné par l'unité de commande 22, 30, se propage dans la structure 12, puis est reçue par le récepteur du couple actionné.

Q signaux électriques sont ainsi séquentiellement fournis par les récepteurs des Q couples différents émetteur/récepteur constitués. Ils sont numérisés, puis traités par exécution du programme d'ordinateur 28 pour être enregistrés dans une deuxième portion 24B de la mémoire 24 dédiée aux données de traitement des programmes d'ordinateurs 32, 34, 36. En variante, comme cela est généralement pratiqué dans le domaine technique considéré, il est conseillé de commander plusieurs fois chaque couple émetteur/récepteur en émission et réception, par exemple 10 à 1000 fois en fonction de la qualité des signaux électriques reçus, pour recevoir plusieurs signaux électriques par couple et en obtenir un signal à enregistrer en mémoire 24B par un calcul de moyenne. Cela permet d'augmenter le rapport signal sur bruit de la mesure.

Notamment, lorsque la structure 12 est saine, c'est-à-dire sans défauts, Q premiers signaux de référence S_{REF1} peuvent être obtenus et enregistrés en mémoire 24B à l'aide d'une première séquence de mesures exécutée par l'unité de commande 22, 30, avec ou sans répétitions d'émissions et réceptions pour chaque couple émetteur/récepteur constitué. Ils sont représentatifs de la structure 12 sans défauts. Une deuxième séquence de mesures exécutée par l'unité de commande 22, 30 dans les mêmes conditions peut permettre l'obtention et l'enregistrement de Q deuxièmes signaux de référence S_{REF2}, représentatifs également de la structure 12 sans défauts, mais se différenciant des Q premiers signaux de référence S_{REF1} par du bruit aléatoire, ce bruit aléatoire étant inhérent à toute séquence de mesures. En variante, les Q deuxièmes signaux de référence S_{REF2} peuvent aussi être obtenus par ajout de bruit aléatoire simulé aux Q premiers signaux de référence S_{REF1}.

Lorsque l'on souhaite savoir ultérieurement si la structure 12 reste saine ou si elle présente un ou plusieurs défauts, une nouvelle séquence de mesures exécutée par l'unité de commande 22, 30 permet d'obtenir et enregistrer en mémoire 24B Q signaux notés S qui sont alors à comparer aux signaux de référence S_{REF1} et/ou S_{REF2}.

A cet effet, le programme d'ordinateur 32 de l'unité centrale de traitement 22, 38 comporte des instructions définies pour corréler chacun des Q signaux S avec le premier signal de référence qui lui correspond dans l'ensemble des Q premiers signaux de référence S_{REF1}, de manière à obtenir Q premières valeurs de corrélations V₁, ..., V_{Q}. Ces valeurs de corrélation sont obtenues de façon connue en soi, par exemple selon l'enseignement du document de Zhao et al précédemment cité : ce sont des valeurs scalaires, avantageusement normalisées entre 0 et 1. Une valeur de corrélation à 1 indique une corrélation totale entre l'un des signaux S et le premier signal de référence qui lui correspond, c'est-à-dire une probabilité minimale de présence d'au moins un défaut dans un voisinage (à définir) du segment constitué du couple émetteur/récepteur considéré. Au contraire, une valeur de corrélation à 0 indique une corrélation nulle entre l'un des signaux S et le premier signal de référence qui lui correspond, c'est-à-dire une probabilité maximale de présence d'au moins un défaut dans un voisinage (à définir) du segment constitué du couple émetteur/récepteur considéré. On peut donc en déduire Q premières valeurs de probabilités P₁, ..., P_{Q}, définies de la façon suivante : ∀i, 1 ≤ i ≤ Q, Pᵢ = 1 - Vᵢ.

Le programme d'ordinateur 34 de l'unité centrale de traitement 22, 38 comporte des instructions définies pour construire une image Im_{INIT} de probabilités de défauts dans la structure 12 à partir des Q premières valeurs de corrélations V₁, ..., V_{Q}. Dans un mode de réalisation simple tel qu'inspiré de l'enseignement de la méthode algorithmique RAPID du document de Zhao et al précité, l'image Im_{INIT} est plus précisément construite à partir des Q premières valeurs de probabilités P₁, ..., P_{Q}. Chaque première valeur de probabilité Pᵢ associée au i-ème couple émetteur/récepteur constitué est exploitée pour construire une image intermédiaire de localisation probable d'au moins un défaut dans une zone elliptique prédéterminée autour de l'émetteur et du récepteur considérés. Cette zone est par exemple délimitée par une ellipse dont les foyers sont l'émetteur et le récepteur du couple considéré, ou par une ellipse dont le grand axe est le segment constitué entre l'émetteur et le récepteur du couple considéré. Les valeurs de pixels dans chaque image intermédiaire sont maximales et fonction de la première valeur de probabilité Pᵢ correspondante sur le segment constitué de l'émetteur et du récepteur considérés. Puis ces valeurs de pixels décroissent vers 0 lorsque l'on s'éloigne du segment émetteur-récepteur vers l'ellipse. On construit ensuite l'image complète de probabilités de défauts Im_{INIT} en sommant les Q images intermédiaires. L'enseignement du document de Li et al précité peut également avantageusement être exploité pour améliorer les instructions du programme d'ordinateur 34.

Les instructions du programme d'ordinateur 32 permettent également de corréler chacun des Q premiers signaux de référence S_{REF1} avec le deuxième signal de référence qui lui correspond dans l'ensemble des Q deuxièmes signaux de référence S_{REF2}, de manière à obtenir Q deuxièmes valeurs de corrélations V'₁, ..., V'_{Q} et en déduire Q deuxièmes valeurs de probabilités P'₁, ..., P'_{Q}. De même, les instructions du programme d'ordinateur 34 permettent également de construire une image bruitée de référence Im_{REF} à partir des Q deuxièmes valeurs de corrélations V'₁, ..., V'_{Q} ou, plus précisément, des Q deuxièmes valeurs de probabilités P'₁, ..., P'_{Q}.

Enfin, le programme d'ordinateur 36 de l'unité centrale de traitement 22, 38 comporte des instructions pour construire une image corrigée Im_{CORR} de probabilités de défauts en soustrayant, de pixel à pixel, l'image bruitée de référence Im_{REF} à l'image Im_{INIT} de probabilités de défauts : Im_{CORR} = Im_{INIT} - Im_{REF}.

L'installation 10' illustrée sur la figure 2 comporte le même circuit électronique 20 de commande et de traitement que l'installation 10 de la figure 1, mais diffère par le nombre et l'emplacement des transducteurs. Le dispositif d'imagerie 16' de l'installation 10' comporte en effet un nombre N = 9 de transducteurs 18', représentés par des points noirs, répartis à l'intérieur de la zone 14' à imager, cette répartition pouvant être régulière sans que cela ne soit une obligation. La zone 14' est par exemple rectangulaire ou carrée et la répartition des transducteurs 18' est par exemple matricielle. Une telle disposition matricielle est généralement qualifiée de « configuration d'imagerie », selon laquelle les transducteurs 18' sont parsemés dans la zone 14' à imager de la structure 12 en formant plusieurs cellules élémentaires permettant d'identifier globalement dans quelle cellule de transducteurs est localisé un défaut.

Le circuit électronique 20 de commande et de traitement a été présenté comme étant un dispositif informatique à processeur exécutant un ensemble de programmes d'ordinateurs 26, 28, 32, 34, 36 stockés en mémoire 24A. Ces programmes d'ordinateurs sont eux-mêmes présentés comme distincts mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le circuit électronique 20 pourrait être remplacé par un dispositif électronique composé uniquement de circuits numériques (sans programme d'ordinateur) pour la réalisation des mêmes actions.

Un procédé d'imagerie pouvant être mis en œuvre par le dispositif 16 ou 16' de la figure 1 ou 2 va maintenant être détaillé.

Au cours d'une première étape 102 d'une première phase d'acquisition 100, les N transducteurs 18 ou 18' sont répartis sur une surface de la structure 12, par exemple autour de la zone 14 ou à l'intérieur de la zone 14' à imager. Plus généralement, la première étape 102 consiste à répartir N émetteurs d'ondes mécaniques destinées à se propager dans la structure 12 et P récepteurs d'ondes mécaniques après leur propagation dans la structure 12. Plus généralement également et selon l'application envisagée, les émetteurs et récepteurs peuvent être répartis sur plusieurs surfaces de la structure 12 si elle en comporte effectivement plusieurs, notamment sur deux faces opposées. Cette première étape 102 est exécutée lorsque la structure 12 est considérée sans défauts, de manière à obtenir et enregistrer des signaux de référence selon les modalités définies précédemment. En variante, si l'on ne peut pas disposer préalablement de la structure 12 sans défauts, l'étape 102 peut être réalisée sur un échantillon similaire à ce qu'aurait dû être la structure 12 sans défauts, de préférence identique ou quasiment identique en tous points à la structure 12 sans défauts, y compris en termes d'instrumentation. On peut ainsi de même obtenir les signaux de référence selon les modalités définies précédemment.

Au cours d'une étape suivante 104, les N transducteurs 18 ou 18' sont actionnés séquentiellement par l'unité centrale de commande 22, 30, notamment par exécution des programmes 26 et 28, pour obtenir et enregistrer les Q premiers signaux de référence S_{REF1} correspondant à l'actionnement de Q couples émetteur/récepteur parmi les N×(N-1) couples différents possibles, avec ou sans répétitions d'émissions et réceptions pour chaque couple émetteur/récepteur constitué.

Au cours d'une étape suivante 106, qui peut représenter une durée très importante par rapport aux durées d'exécution des étapes 102 et 104, la structure 12 subit des contraintes telles qu'un ou plusieurs défauts est susceptible d'apparaître dans son volume intérieur ou en surface. Cela peut par exemple se produire pendant une étape de fabrication ou d'utilisation impliquant la structure 12. En variante, si l'on ne dispose pas préalablement de la structure 12 sans défauts, cette étape 106 peut ne pas exister.

Enfin, au cours d'une dernière étape 108 de la phase d'acquisition 100, les N transducteurs 18 ou 18' sont de nouveau actionnés séquentiellement, selon la même séquence que celle de l'étape 104, par l'unité centrale de commande 22, 30, notamment par exécution des programmes 26 et 28, mais cette fois-ci sur la structure 12 avec un ou plusieurs défauts éventuels, pour obtenir et enregistrer les Q signaux S correspondant à l'actionnement des Q couples émetteur/récepteur précités, avec ou sans répétitions d'émissions et réceptions pour chaque couple émetteur/récepteur constitué. Pour cette étape 108, il peut être avantageux de respecter autant que possible les mêmes conditions d'inspection, par exemple les mêmes conditions environnementales, que celles de l'étape 104, ou au moins de s'en approcher. Mais ce n'est pas une obligation. Il a en effet été constaté que même si l'on s'écarte significativement des conditions d'inspection initiales (celles de l'étape 104) à l'étape 108, un procédé d'imagerie selon l'invention reste capable de fournir des résultats exploitables en termes de détection et localisation de défauts.

La phase d'acquisition 100 est suivie d'une phase de traitement 200 exécutée par l'unité centrale de traitement 22, 38.

Une étape préalable de simulation 202 consiste à obtenir artificiellement les Q deuxièmes signaux de référence S_{REF2} par ajout de bruit aléatoire simulé aux Q premiers signaux de référence S_{REF1}. Les Q premiers signaux de référence S_{REF1} étant à la fois constitués de bruit aléatoire de mesure continu et de signaux utiles impulsionnels ou harmoniques de durée finie, il est très facile d'en extraire certains paramètres statistiques de bruit et de signal utile, notamment la moyenne et l'écart-type. Le bruit aléatoire simulé ajouté aux Q premiers signaux de référence S_{REF1} pour obtenir les Q deuxièmes signaux de référence S_{REF2} est ainsi par exemple de moyenne nulle et d'écart-type compris éventuellement entre celui du bruit mesurable dans les Q premiers signaux de référence S_{REF1} et celui du signal impulsionnel utile également mesurable dans les Q premiers signaux de référence S_{REF1}. De préférence, l'écart-type du bruit aléatoire simulé est plus proche de celui du bruit mesuré que de celui du signal impulsionnel utile mesuré. Il est même avantageusement du même ordre de grandeur que celui du bruit mesuré. En variante, comme cela a été abordé précédemment, il est possible de remplacer l'étape de simulation 202 par deux séquences successives de mesures à l'étape 104, pour obtenir successivement et par mesure les signaux de références S_{REF1} et S_{REF2}.

Une première étape de corrélation 204, réalisée par exécution du programme d'ordinateur 32 sur les signaux S et S_{REF1}, permet d'obtenir les Q premières valeurs de corrélations V₁, ..., V_{Q}.

Une première étape de construction 206, réalisée par exécution du programme d'ordinateur 34 sur les Q premières valeurs de corrélations V₁, ..., V_{Q}, permet d'obtenir l'image Im_{INIT} de probabilités de défauts.

Une deuxième étape de corrélation 208, réalisée par exécution du programme d'ordinateur 32 sur les signaux S_{REF1} et S_{REF2}, permet d'obtenir les Q deuxièmes valeurs de corrélations V'₁, ..., V'_{Q}.

Une deuxième étape de construction 210, réalisée par exécution du programme d'ordinateur 34 sur les Q deuxièmes valeurs de corrélations V'₁, ..., V'_{Q}, permet d'obtenir l'image bruitée de référence Im_{REF}.

Enfin, une dernière étape de soustraction 212, réalisée par exécution du programme d'ordinateur 36 après les étapes 202 à 210, permet d'obtenir l'image corrigée Im_{CORR}.

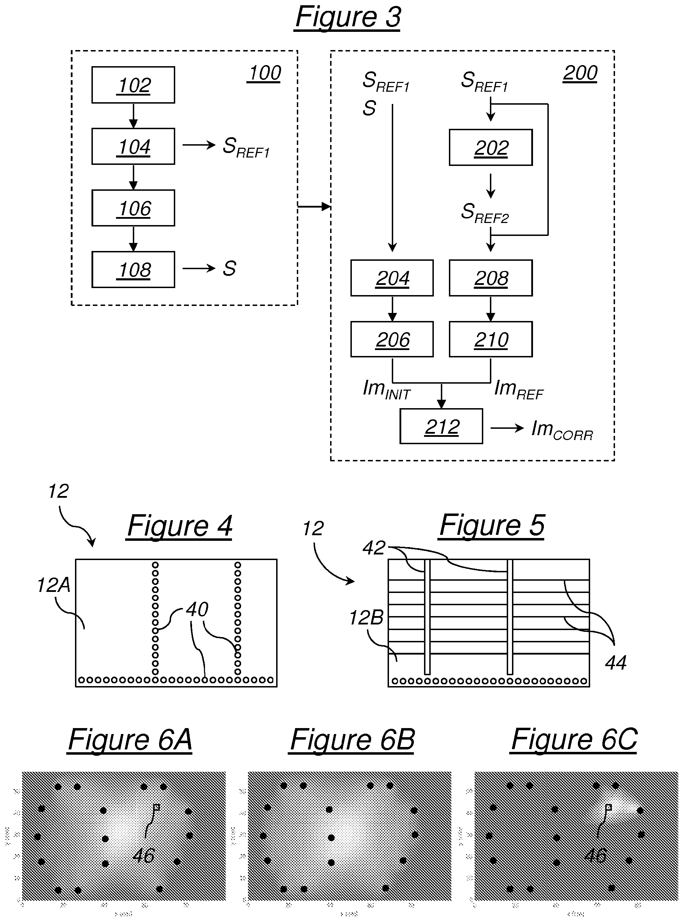

La figure 4 illustre en vue de face avant 12A un exemple de structure 12 à imager. Il s'agit par exemple d'un panneau composite rectangulaire avec trous de rivets et raidisseurs, notamment une portion d'aile d'avion. Les trous de rivets 40 sont visibles sur la figure 4 et représentés par des petits cercles disposés selon deux colonnes et une ligne en bordure inférieure. Le panneau peut lui-même être légèrement courbé, ce qui n'est pas visible sur la figure 4.

La figure 5 illustre le même panneau composite 12 en vue de face arrière 12B. Les raidisseurs sont visibles sur cette figure : ils comportent deux raidisseurs épais verticaux 42 et sept raidisseurs fins horizontaux 44. Les deux raidisseurs épais 42 couvrent les deux colonnes de trous de rivets jusqu'à proximité de la ligne inférieure de trous de rivets.

La structure 12 des figures 4 et 5 est un bon exemple de structure mince complexe, parce que la présence des trous de rivets 40 à effet de diffraction et des raidisseurs 42, 44 perturbe fortement la propagation des ondes mécaniques de volume ou de surface guidées dans la structure 12. Il est très difficile de modéliser la propagation exacte des ondes mécaniques guidées dans ce type de structure en raison de sa complexité. Les algorithmes de l'état de la technique connus pour fournir des résultats très précis sous réserve d'une connaissance *a priori* de la géométrie de la structure, ou au moins de la propagation des ondes dans la structure, sont par conséquent inapplicables pour ce type de structure complexe ou exigent un effort de simulation prohibitif.

Les figures 6A, 6B et 6C sont des images obtenues dans le repère de la face avant 12A du panneau composite des figures 4 et 5 en disposant seize transducteurs répartis conformément aux points noirs indiqués sur ces figures 6A, 6B et 6C. Selon le repère indiqué sur ces figures, le panneau composite est de largeur égale à environ 100 cm et de hauteur égale à environ 60 cm. Un défaut 46 à l'échelle du centimètre a été artificiellement créé pour les besoins de l'expérience, par exemple à l'aide de deux petits aimants disposés en vis-à-vis des deux côtés de la structure 12 : l'avantage de ce type de défaut artificiellement créé est qu'il est amovible tout en exerçant des contraintes mécaniques observables en tant que défaut, en particulier en termes de création d'ondes réfléchies.

La figure 6A est l'image Im_{INIT} de probabilités de défauts obtenue à l'issue de l'étape 206. Elle correspond à ce qui peut être obtenu par application directe de l'algorithme RAPID. Plus les pixels sont clairs, plus cela signifie que la probabilité de la présence d'un défaut est élevée. Au contraire, plus ils sont sombres, plus cela signifie que la probabilité de la présence d'un défaut est faible. Plus précisément, la valeur des pixels représente une échelle arbitraire proportionnelle à la probabilité de présence d'un défaut, tel que détecté par le procédé détaillé précédemment jusqu'à l'étape 206. Il apparaît que la figure 6A ne permet pas de localiser et caractériser le défaut 46. Elle serait même de nature à orienter l'observateur vers une fausse détection en partie centrale de l'image. Cela est dû au biais introduit par la méthode de construction d'image choisie.

La figure 6B est l'image bruitée de référence Im_{REF} obtenue à l'issue de l'étape 210 à partir des mesures réalisées sur la structure 12 sans le défaut 46. Elle reprend intégralement le biais introduit par la méthode de construction d'image choisie, lié notamment à la géométrie de la structure 12 et au placement des transducteurs 18. On y voit de nouveau une probabilité de présence de défaut non nulle en partie centrale de l'image, bien que cette image ait été obtenue à partir de S_{REF1} et S_{REF2}.

La figure 6C est l'image corrigée Im_{CORR} de probabilités de défauts obtenue à l'issue de l'étape 212. Le biais introduit par la méthode de construction d'image choisie y est quasiment complètement supprimé par soustraction de l'image Im_{REF} à l'image Im_{INIT}, ce qui permet de faire apparaître une zone plus claire effectivement centrée autour du défaut 46. Cette zone plus claire de détection du défaut 46 n'était absolument pas visible sur la figure 6A. De nouveau, l'échelle de valeurs des pixels de la figure 6C ne fournit que des informations relatives : la probabilité de présence d'un défaut est bien plus grande dans la zone claire que dans le reste de l'image.

Il apparaît clairement qu'un dispositif d'imagerie tel que l'un de ceux, 16 ou 16', décrits précédemment permet d'éliminer le biais engendré par la méthode de construction d'image à partir des valeurs de corrélations calculées, ce biais étant fortement dépendant du positionnement des transducteurs, ou plus généralement des émetteurs et récepteurs, et de la géométrie de la structure inspectée. Cela permet au final d'assurer une détection robuste et bien plus fiable et précise du ou des défauts, tout en réduisant considérablement le risque de fausses détections, tout cela dans un contexte de traitement algorithmique qui reste particulièrement simple par rapport aux autres méthodes d'imagerie exigeant la connaissance de la géométrie et des propriétés mécaniques de la structure inspectée.

On notera par ailleurs que l'invention n'est pas limitée aux modes de réalisation décrits précédemment.

Notamment la construction d'images intermédiaires par zones elliptiques pourrait être adaptée selon différentes formes possibles de zones autour des couples émetteur/récepteur constitués et selon différents paramétrages empiriques possibles. En d'autres termes la mise en œuvre de la présente invention ne se limite pas au contexte de l'algorithme RAPID tel qu'enseigné dans le document de Zhao et al précité ou amélioré dans le document de Li et al précité.

Il apparaîtra plus généralement à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

## Revendications

1. Dispositif (16 ; 16') d'imagerie de défauts (46) d'une structure (12) par émission et réception d'ondes mécaniques dans cette structure, comportant :
- une pluralité de N émetteurs (18 ; 18') d'ondes mécaniques destinées à se propager dans la structure (12), à répartir sur au moins une surface de la structure,
- une pluralité de P récepteurs (18 ; 18') d'ondes mécaniques après leur propagation dans la structure (12), à répartir sur ladite au moins une surface de la structure,
- une unité centrale (22, 30) de commande des N émetteurs (18 ; 18') et P récepteurs (18 ; 18') programmée pour enregistrer Q ≤ N×P signaux (S) obtenus à partir de signaux électriques fournis respectivement par les récepteurs de Q couples différents émetteur/récepteur de la pluralité d'émetteurs et récepteurs, après réception d'ondes mécaniques émises par les émetteurs desdits Q couples différents,
- des moyens (24B) de stockage de Q premiers signaux de référence correspondants (S_{REF1}), représentatifs de la structure (12) sans défauts,
- une unité centrale (22, 38) de traitement des Q signaux obtenus (S), programmée pour corréler (32) chaque signal obtenu (S) avec le premier signal de référence (S_{REF1}) qui lui correspond, de manière à obtenir Q premières valeurs de corrélations, et pour construire (34) une image (Im_{INIT}) de probabilités de défauts dans la structure (12) à partir des Q premières valeurs de corrélations,
**caractérisé en ce qu'**il comporte en outre des moyens (24B) de stockage de Q deuxièmes signaux de référence correspondants (S_{REF2}), représentatifs également de la structure (12) sans défauts mais se différenciant des Q premiers signaux de référence (S_{REF1}) par du bruit aléatoire, et **en ce que** l'unité centrale (22, 38) de traitement des Q signaux obtenus (S) est en outre programmée pour :
- corréler (32) chaque premier signal de référence (S_{REF1}) avec le deuxième signal de référence (S_{REF2}) qui lui correspond, de manière à obtenir Q deuxièmes valeurs de corrélations,
- construire (34) une image bruitée de référence (Im_{REF}) à partir des Q deuxièmes valeurs de corrélations, et
- soustraire (36) l'image bruitée de référence (Im_{REF}) de l'image (Im_{INIT}) de probabilités de défauts.

2. Dispositif d'imagerie (16 ; 16') selon la revendication 1, dans lequel au moins une partie des N émetteurs (18 ; 18') fait partie des P récepteurs (18 ; 18').

3. Dispositif d'imagerie (16 ; 16') selon la revendication 1 ou 2, dans lequel chacun des N émetteurs (18 ; 18') et des P récepteurs (18 ; 18') est un actionneur ou capteur choisi dans l'ensemble constitué de :
- un transducteur piézoélectrique,
- un transducteur électromagnétique-acoustique,
- un transducteur microélectromécanique ou nanoélectromécanique,
- un capteur à fibre optique, et
- un capteur laser.

4. Dispositif d'imagerie (16 ; 16') selon l'une quelconque des revendications 1 à 3, dans lequel chacun des N émetteurs (18 ; 18') et des P récepteurs (18 ; 18') est apte à émettre ou capter des ondes guidées dans la structure (12), notamment des ondes de Lamb ou de Rayleigh.

5. Dispositif d'imagerie (16 ; 16') selon l'une quelconque des revendications 1 à 4, dans lequel Q = N×P, ou N = P et Q = N×(N-1).

6. Installation (10) d'imagerie de défauts (46) d'une structure (12) par émission et réception d'ondes mécaniques dans cette structure, comportant :
- la structure (12) dans laquelle se trouve une zone (14) à imager,
- un dispositif d'imagerie (16) selon l'une quelconque des revendications 1 à 5,
dans laquelle les N émetteurs (18) et P récepteurs (18) sont disposés circulairement autour de la zone (14) à imager pour une construction de l'image (Im_{INIT}) de probabilités de défauts correspondant à cette zone (14).

7. Installation (10') d'imagerie de défauts (46) d'une structure (12) par émission et réception d'ondes mécaniques dans cette structure, comportant :
- la structure (12) dans laquelle se trouve une zone (14') à imager,
- un dispositif d'imagerie (16') selon l'une quelconque des revendications 1 à 5,
dans laquelle les N émetteurs (18') et P récepteurs (18') sont répartis à l'intérieur de la zone (14') à imager pour une construction de l'image (Im_{INIT}) de probabilités de défauts correspondant à cette zone (14').

8. Procédé d'imagerie de défauts (46) d'une structure (12) par émission et réception d'ondes mécaniques dans cette structure, comportant les étapes suivantes :
- répartir (102), sur au moins une surface de la structure (12), une pluralité de N émetteurs (18 ; 18') d'ondes mécaniques destinées à se propager dans la structure (12),
- répartir (102), sur ladite au moins une surface de la structure (12), une pluralité de P récepteurs (18 ; 18') d'ondes mécaniques après leur propagation dans la structure (12),
- commander (108) les N émetteurs (18 ; 18') et P récepteurs (18 ; 18') pour émettre et recevoir séquentiellement des ondes mécaniques par les émetteurs et récepteurs de Q ≤ N×P couples différents émetteur/récepteur de la pluralité d'émetteurs et récepteurs,
- enregistrer (108) Q signaux (S) obtenus à partir de signaux électriques fournis respectivement par les récepteurs des Q couples différents, après réception desdites ondes mécaniques,
- traiter les Q signaux obtenus (S) en les corrélant (204) respectivement avec Q premiers signaux de référence (S_{REF1}) correspondants, représentatifs de la structure (12) sans défauts, de manière à obtenir Q premières valeurs de corrélations,
- construire (206) une image (Im_{INIT}) de probabilités de défauts dans la structure (12) à partir des Q premières valeurs de corrélations,
**caractérisé en ce qu'**il comporte en outre les étapes suivantes :
- corréler (208) les Q premiers signaux de référence (S_{REF1}) respectivement avec Q deuxièmes signaux de référence (S_{REF2}) correspondants, représentatifs également de la structure (12) sans défauts mais se différenciant des Q premiers signaux de référence (S_{REF1}) par du bruit aléatoire, de manière à obtenir Q deuxièmes valeurs de corrélations,
- construire (210) une image bruitée de référence (Im_{REF}) à partir des Q deuxièmes valeurs de corrélations, et
- soustraire (212) l'image bruitée de référence (Im_{REF}) de l'image (Im_{INIT}) de probabilités de défauts.

9. Procédé d'imagerie selon la revendication 8, dans lequel les Q deuxièmes signaux de référence (S_{REF2}) se différencient des Q premiers signaux de référence (S_{REF1}) par du bruit aléatoire, simulé ou mesuré, dont l'écart-type est compris entre celui d'un bruit mesurable dans les Q premiers signaux de référence (S_{REF1}) et celui d'un signal impulsionnel ou harmonique utile également mesurable dans les Q premiers signaux de référence (S_{REF1}), de préférence plus proche de celui du bruit mesurable que de celui du signal impulsionnel utile mesurable.

10. Procédé d'imagerie selon la revendication 8 ou 9, dans lequel la construction (206) de l'image (Im_{INIT}) de probabilités de défauts et la construction (210) de l'image bruitée de référence (Im_{REF}) comportent chacune la construction de Q images intermédiaires, chaque image intermédiaire correspondant à l'un des Q couples différents émetteur/récepteur et prenant en compte la première ou deuxième valeur de corrélation correspondante dans une zone prédéterminée, notamment une zone elliptique, définie autour du segment constitué entre l'émetteur et le récepteur de ce couple.

## Patentansprüche

1. Bildgebungsvorrichtung (16; 16') von Fehlern (46) einer Struktur (12) durch Senden und Empfangen mechanischer Wellen in dieser Struktur, umfassend:
- eine Vielzahl von N Sendern (18; 18') mechanischer Wellen, die sich in der Struktur (12) ausbreiten sollen, um sich auf mindestens eine Oberfläche der Struktur zu verteilen,
- eine Vielzahl von P Empfängern (18; 18') mechanischer Wellen nach ihrer Ausbreitung in der Struktur (12), um sich auf mindestens eine Oberfläche der Struktur zu verteilen,
- eine Zentraleinheit (22, 30) zur Steuerung der N Sender (18; 18') und P Empfänger (18; 18'), die so programmiert ist, dass sie Q ≤ NxP Signale (S) aufzeichnet, die aus elektrischen Signalen gewonnen werden, die von den Empfängern der verschiedenen Q Paare von Sender/Empfänger der Vielzahl von Sendern und Empfänger nach Empfang mechanischer Wellen, die von den Sendern der verschiedenen Q Paare gesendet werden, bereitgestellt werden,
- Mittel (24B) zur Speicherung von Q ersten entsprechenden Referenzsignalen (S_{REF1}), die für die fehlerfreie Struktur (12) repräsentativ sind,
- eine Zentraleinheit (22, 38) zur Verarbeitung der Q erhaltenen Signale (S), die so programmiert ist, dass sie jedes erhaltene Signal (S) mit dem ihm entsprechenden ersten Referenzsignal (S_{REF1}) korreliert (32), um Q erste Korrelationswerte zu erhalten, und um ein Bild (Im_{INIT}) der Fehlerwahrscheinlichkeiten in der Struktur (12) ausgehend von Q ersten Korrelationswerten aufzubauen (34), **dadurch gekennzeichnet, dass** es ferner Mittel (24B) zur Speicherung entsprechender Q-Zweitreferenzsignale (S_{REF2}) aufweist, die auch für die fehlerfreie Struktur (12) repräsentativ sind, sich aber durch zufälliges Rauschen von den Q-Erstreferenzsignalen (S_{REF1}) unterscheiden, und dass die Zentraleinheit (22, 38) zur Verarbeitung der Q erhaltenen Signale (S) ferner programmiert ist für:
- Korrelieren (32) jedes ersten Referenzsignals (S_{REF1}) mit dem ihm entsprechenden zweiten Referenzsignal (S_{REF2}), um Q zweite Korrelationswerte zu erhalten,
- Aufbauen (34) eines Referenzrauschens (Im_{REF}) ausgehend von den Q zweiten Korrelationswerten, und
- das Referenzrauschen (Im_{REF}) vom Bild (Im_{INIT}) der Fehlerwahrscheinlichkeiten subtrahieren (36).

2. Bildgebungsvorrichtung (16; 16') nach Anspruch 1, wobei mindestens ein Teil der N Sender (18; 18') zu den P Empfängern (18; 18') gehört.

3. Bildgebungsvorrichtung (16; 16') nach Anspruch 1 oder 2, wobei jeder der N Sender (18; 18') und der P Empfänger (18; 18') ein Aktuator oder Sensor ist, der aus der Baugruppe ausgewählt ist, bestehend aus:
- einem piezoelektrischen Wandler,
- einem elektromagnetischen/akustischen Wandler,
- einem mikro- oder nanoelektromechanischen Wandler,
- einem Glasfasersensor und
- einem Lasersensor.

4. Bildgebungsvorrichtung (16; 16') nach einem der Ansprüche 1 bis 3, wobei jeder der N Sender (18; 18') und der P Empfänger (18; 18') in der Lage ist, in der Struktur (12) geführte Wellen, insbesondere Lamb- oder Rayleigh-Wellen, zu senden oder zu empfangen.

5. Bildgebungsvorrichtung (16; 16') nach einem der Ansprüche 1 bis 4, wobei Q = NxP, oder N = P und Q = Nx(N-1).

6. Installation (10) zur Bildgebung von Fehlern (46) einer Struktur (12) durch Senden und Empfangen mechanischer Wellen in dieser Struktur, umfassend:
- die Struktur (12), in der sich ein abzubildender Bereich (14) befindet,
- eine Bildgebungsvorrichtung (16) nach einem der Ansprüche 1 bis 5,
wobei die N Sender (18) und P Empfänger (18) kreisförmig um den abzubildenden Bereich (14) für eine Bildkonstruktion (Im_{INIT}) von Fehlerwahrscheinlichkeiten angeordnet sind, die diesem Bereich (14) entsprechen.

7. Installation (10') zur Bildgebung von Fehlern (46) einer Struktur (12) durch Senden und Empfangen mechanischer Wellen in dieser Struktur, umfassend:
- die Struktur (12), in der sich ein abzubildender Bereich (14') befindet,
- eine Bildgebungsvorrichtung (16') nach einem der Ansprüche 1 bis 5,
wobei die N Sender (18') und P Empfänger (18') innerhalb des abzubildenden Bereichs (14') für eine Bildkonstruktion (Im_{INIT}) von Fehlerwahrscheinlichkeiten, die diesem Bereich (14') entsprechen, aufgeteilt sind.

8. Verfahren zur Bildgebung von Fehlern (46) einer Struktur (12) durch Senden und Empfangen mechanischer Wellen in dieser Struktur, das folgende Schritte umfasst:
- Verteilen (102) einer Vielzahl von N Sendern (18; 18') mechanischer Wellen, die sich in der Struktur (12) ausbreiten sollen, auf mindestens eine Oberfläche der Struktur (12),
- Verteilen (102) einer Vielzahl von P Empfängern (18; 18') mechanischer Wellen nach ihrer Ausbreitung in der Struktur (12) auf die mindestens eine Oberfläche der Struktur (12),
- Steuern (108) der N Sender (18; 18') und P Empfänger (18; 18') zum sequentiellen Senden und Empfangen mechanischer Wellen durch die Sender und Empfänger von Q ≤ NxP verschiedenen Paare von Sender/Empfänger der Vielzahl von Sender und Empfänger,
- Speichern (108) von Q Signalen (S), die aus elektrischen Signalen gewonnen werden, die von den Empfängern der verschiedenen Q Paare jeweils geliefert werden, nach Empfang der mechanischen Wellen,
- Verarbeiten der erhaltenen Q Signale (S), indem sie (204) jeweils mit den entsprechenden Q ersten Referenzsignalen (S_{REF1}) korreliert werden, die für die fehlerfreie Struktur (12) repräsentativ sind, um Q erste Korrelationswerte zu erhalten,
- Aufbauen (206) eines Bildes (Im_{INIT}) der Fehlerwahrscheinlichkeiten in der Struktur (12) ausgehend von den Q ersten Korrelationswerten,
**dadurch gekennzeichnet, dass** es ferner folgende Schritte umfasst:
- Korrelieren (208) der Q ersten Referenzsignale (S_{REF1}) jeweils mit Q entsprechenden zweiten Referenzsignalen (S_{REF2)}, die ebenfalls für die fehlerfreie Struktur (12) repräsentativ sind, sich aber von den Q ersten Referenzsignalen (S_{REF1}) durch zufälliges Rauschen unterscheiden, um Q zweite Korrelationswerte zu erhalten,
Aufbauen (210) eines Referenzrauschens (lm_{REF}) aus den Q zweiten Korrelationswerten, und
das Referenzrauschen (Im_{REF}) vom Bild (Im_{INIT}) der Fehlerwahrscheinlichkeiten subtrahieren (212).

9. Bildgebungsverfahren nach Anspruch 8, wobei sich die Q zweiten Referenzsignale (S_{REF2}) von den Q ersten Referenzsignalen (S_{REF1}) durch zufälliges, simuliertes oder gemessenes Rauschen unterscheiden, dessen Standardabweichung zwischen dem eines in den Q ersten Referenzsignalen (S_{REF1}) messbaren Rauschens und dem eines ebenfalls in den Q ersten Referenzsignalen (S_{REF1}) messbaren nutzbaren Impuls- oder harmonischen Signals liegt, vorzugsweise näher am messbaren Rauschen als am messbaren nutzbaren Impulssignal.

10. Bildgebungsverfahren nach Anspruch 8 oder 9, wobei die Konstruktion (206) des Bildes (Im_{INIT}) der Fehlerwahrscheinlichkeiten und der Aufbau (210) des Referenzrauschens (Im_{REF}) jeweils den Aufbau von Q Zwischenbildern umfassen, wobei jedes Zwischenbild einem der Q verschiedenen Paare von Sender/Empfänger entspricht und den ersten oder zweiten entsprechenden Korrelationswert in einem vorbestimmten Bereich, insbesondere einem elliptischen Bereich, berücksichtigt, definiert um das Segment zwischen dem Sender und dem Empfänger dieses Paars.

## Claims

1. A device (16; 16') for imaging defects (46) in a structure (12) by transmitting and receiving mechanical waves in this structure, including:
- a plurality of N transmitters (18; 18') of mechanical waves intended to propagate in the structure (12), to be distributed over at least one surface of the structure,
- a plurality of P receivers (18; 18') of mechanical waves after their propagation in the structure (12), to be distributed over said at least one surface of the structure,
- a central unit (22, 30) for controlling the N transmitters (18; 18') and P receivers (18; 18') programmed to record Q ≤ N×P signals (S) obtained from electrical signals respectively provided by the receivers of Q different transmitter/receiver pairs of the plurality of transmitters and receivers, after reception of mechanical waves transmitted by the transmitters of said Q different pairs,
- means (24B) for storing Q corresponding first reference signals (S_{REF1}), representative of the structure (12) without defects,
- a central unit (22, 38) for processing the Q signals (S) obtained, programmed to correlate (32) each signal (S) obtained with the first reference signal (S_{REF1}) that corresponds to it, in such a way as to obtain Q first values of correlations, and to construct (34) an image (Im_{INIT}) of probabilities of defects in the structure (12) from the Q first values of correlations,
**characterized in that** it further includes means (24B) for storing Q corresponding second reference signals (S_{REF2}), also representative of the structure (12) without defects but differing from the Q first reference signals (S_{REF1}) by random noise, and **in that** the central unit (22, 38) for processing the Q signals (S) obtained is further programmed to:
- correlate (32) each first reference signal (S_{REF1}) with the second reference signal (S_{REF2}) that corresponds to it, in such a way as to obtain Q second values of correlations,
- construct (34) a reference noisy image (Im_{REF}) from the Q second values of correlations, and
- subtract (36) the reference noisy image (Im_{REF}) from the image (Im_{INIT}) of probabilities of defects.

2. The imaging device (16; 16') according to claim 1, wherein at least a part of the N transmitters (18; 18') is part of the P receivers (18; 18').

3. The imaging device (16; 16') according to claim 1 or 2, wherein each of the N transmitters (18; 18') and of the P receivers (18; 18') is an actuator or a sensor chosen from the set consisting of:
- a piezoelectric transducer,
- an electromagnetic acoustic transducer,
- a microelectromechanical or nanoelectromechanical transducer,
- a fiber-optic sensor, and
- a laser sensor.

4. The imaging device (16; 16') according to any one of claims 1 to 3, wherein each of the N transmitters (18; 18') and of the P receivers (18; 18') is capable of transmitting or receiving guided waves in the structure (12), in particular Lamb or Rayleigh waves.

5. The imaging device (16; 16') according to any one of claims 1 to 4, wherein Q = N×P, or N = P and Q = N×(N-1).

6. A system (10) for imaging defects (46) in a structure (12) by transmitting and receiving mechanical waves in this structure, including:
- the structure (12) in which a zone (14) to be imaged is located,
- an imaging device (16) according to any one of claims 1 to 5,
wherein the N transmitters (18) and P receivers (18) are disposed circularly around the zone (14) to be imaged for a construction of the image (Im_{INIT}) of probabilities of defects corresponding to this zone (14).

7. A system (10') for imaging defects (46) in a structure (12) by transmitting and receiving mechanical waves in this structure, including:
- the structure (12) in which a zone (14') to be imaged is located,
- an imaging device (16') according to any one of claims 1 to 5,
wherein the N transmitters (18') and P receivers (18') are distributed inside the zone (14') to be imaged for a construction of the image (Im_{INIT}) of probabilities of defects corresponding to this zone (14').

8. A method for imaging defects (46) in a structure (12) by transmitting and receiving mechanical waves in this structure, including the following steps:
- distributing (102), over at least one surface of the structure (12), a plurality of N transmitters (18; 18') of mechanical waves intended to propagate in the structure (12),
- distributing (102), over said at least one surface of the structure (12), a plurality of P receivers (18; 18') of mechanical waves after their propagation in the structure (12),
- controlling (108) the N transmitters (18; 18') and P receivers (18; 18') to sequentially transmit and receive mechanical waves by the transmitters and receivers of Q ≤ N×P different transmitter/receiver pairs of the plurality of transmitters and receivers,
- recording (108) Q signals (S) obtained from electrical signals respectively provided by the receivers of the Q different pairs, after reception of said mechanical waves,
- processing the Q signals (S) obtained by respectively correlating (204) them with Q corresponding first reference signals (S_{REF1}), representative of the structure (12) without defects, in such a way as to obtain Q first values of correlations,
- constructing (206) an image (Im_{INIT}) of probabilities of defects in the structure (12) from the Q first values of correlations,
**characterized in that** it further includes the following steps:
- respectively correlating (208) the Q first reference signals (S_{REF1}) with Q corresponding second reference signals (S_{REF2}), also representative of the structure (12) without defects but differing from the Q first reference signals (S_{REF1}) by random noise, in such a way as to obtain Q second values of correlations,
- constructing (210) a reference noisy image (Im_{REF}) from the Q second values of correlations, and
- subtracting (212) the reference noisy image (Im_{REF}) from the image (Im_{INIT}) of probabilities of defects.

9. The method for imaging device according to claim 8, wherein the Q second reference signals (S_{REF2}) differ from the Q first reference signals (S_{REF1}) by random noise, simulated or measured, the standard deviation of which is between that of a noise measurable in the Q first reference signals (S_{REF1}) and that of a useful pulse or harmonic signal also measurable in the Q first reference signals (S_{REF1}), preferably closer to that of the measurable noise than to that of the measurable useful pulse signal.

10. The method for imaging device according to claim 8 or 9, wherein the construction (216) of the image (Im_{INIT}) of probabilities of defects and the construction (210) of the reference noisy image (Im_{REF}) each include the construction of Q intermediate images, each intermediate image corresponding to one of the Q different transmitter/receiver pairs and taking into account the corresponding first or second correlation value in a predetermined zone, in particular an elliptical zone, defined around the segment formed between the transmitter and the receiver of this pair.
